# EUROPÄISCHE PATENTSCHRIFT

(11) **EP 3 500 886 B1**
(45) Veröffentlichungstag und Bekanntmachung des Hinweises auf die Patenterteilung: **04.05.2022**
(21) Anmeldenummer: 17758440.6
(22) Anmeldetag: 03.08.2017
(51) Int. Cl.: G02B 21/02, G02B 21/22, G02B 21/24, G02B 15/02, G02B 13/00, G02B 7/14, G02B 7/04, G02B 21/04

(54) **WECHSELSYSTEM FÜR EIN MIKROSKOP**
CHANGING SYSTEM FOR A MICROSCOPE
SYSTÈME CHANGEUR DESTINÉ À UN MICROSCOPE

(30) Priorität: 16.08.2016 DE 102016115140
(43) Veröffentlichungstag der Anmeldung: 26.06.2019
(73) Patentinhaber: Leica Microsystems CMS GmbH, 35578 Wetzlar (DE)
(72) Erfinder: SCHUMANN, Christian, 35423 Lich (DE)
(74) Vertreter: Schaumburg und Partner Patentanwälte mbB
(86) Internationale Anmeldenummer: PCT/EP2017/069615
(87) Internationale Veröffentlichungsnummer: WO 2018/033398

(56) Entgegenhaltungen:
- EP-A2- 1 233 294
- DE-B- 1 199 018
- US-A1- 2011 043 904
- US-A1- 2015 043 065

## Beschreibung

Die Erfindung betrifft ein Wechselsystem für ein Mikroskop, umfassend mehrere afokale Vergrößerungswechselmodule unterschiedlicher Vergrößerung, die wahlweise in einen längs einer optischen Achse des Mikroskops verlaufenden Unendlichstrahlengang einbringbar sind. Ferner betrifft die Erfindung ein afokales Vergrößerungswechselmodul sowie ein Mikroskop, das mit einem Wechselsystem oder einem afokalen Vergrößerungswechselmodul ausgestattet ist.

Zur Anpassung der Vergrößerung in optischen Mikroskopsystemen sind sogenannte afokale Vergrößerungswechsler bekannt. In zusammengesetzten Mikroskopen, die einen Unendlichstrahlengang aufweisen, sind diese Vergrößerungswechsler üblicherweise durch Fernrohroptiken realisiert, die in dem Unendlichstrahlengang zwischen Objektiv und Tubuslinse angeordnet sind und beispielsweise mittels eines Revolvers oder einer andersartigen Wechselvorrichtung ausgetauscht werden können.

Die in den Vergrößerungswechslern verwendeten Fernrohroptiken stellen zwar die Afokalität des Mikroskopstrahlengangs sicher. Jedoch wird infolge der unterschiedlichen Vergrößerungen der Fernrohroptiken die Austrittspupille des Objektivs längs der optischen Achse in unterschiedliche Positionen abgebildet, was im Zusammenwirken mit der Tubuslinse zu unterschiedlichen Austrittspupillenlagen des Gesamtsystems führt. Die mit dieser Variation der Austrittspupillenlage einhergehende Vignettierung ist üblicherweise tolerierbar.

Jedoch ist es in speziellen Mikroskopieverfahren häufig erforderlich, die Abbildung in der Fourierebene, welche für objektseitig telezentrische Systeme am Ort der Austrittspupille des Mikroskopobjektivs liegt, zu beeinflussen. Eine solche Beeinflussung kann beispielsweise darin bestehen, ein Modulationselement wie einen räumlichen Lichtmodulator, kurz SLM (Spatial Light Modulator), eine Mikrospiegelanordnung, kurz DMD (Digital Mirror Device) oder eine phasenbeeinflussende Maske in der Fourierebene anzuordnen. Um die genannten Bauteile ortsfest positionieren zu können, ist eine ortsfeste Lage einer zu der Objektivpupille konjungierten Ebene notwendig.

In diesen speziellen Mikroskopieverfahren sind deshalb übliche Vergrößerungswechsler, deren Fernrohroptiken zu einer Variation der Austrittspupillenlage führen, nicht verwendbar.

Vergrößerungswechselsysteme mit ortsfester Pupillenlage sind auch im Zusammenhang mit sogenannten Remote-Focusing-Techniken von Bedeutung, wie sie beispielsweise in der US 8 144 395 B2 und der US 8 582 203 B2 beschrieben sind. Hier ist zum einen eine 4f-Anordnung erforderlich, bei der eine ortsfeste Lage der Objektivpupillen in der Implementation hilfreich ist, da dadurch sämtliche Systemkomponenten ortsfest montiert werden können. Bei einem Objektivwechsel innerhalb der Anordnung muss jedoch auch die Vergrößerung des Gesamtsystems konstant gehalten werden, um die erforderliche Vergrößerungsbedinung für aberrationsfreie Refokussierung aufrecht zu erhalten. Soll nun aber applikationsbedingt, etwa aus Gründen der Deckglaskorrektur, des freien Arbeitsabstands, der Immersion etc., ein anderes objektseitiges Objektiv genutzt werden, so wird ein Zusatzsystem benötigt, das etwaige Vergrößerungsänderungen kompensiert und dabei das Bild der Objektivpupille ortsfest lässt.

DE 11 99 018 B offenbart ein Wechselsystem für binokulare Stereomikroskope nach dem Oberbegriff des Anspruchs 1. Zum Stand der Technik wird ferner auf das Dokument US 2011/043904 A1, das ein binokulares chirurgisches Mikroskop offenbart, das Dokument US 2015/043065 A1, das ein Stereomikroskop offenbart, und das Dokument EP 1 233 294 A2, das ein Operationsmikroskop offenbart, verwiesen.

Aufgabe der Erfindung ist es, ein Wechselsystem für ein Mikroskop, ein afokales Vergrößerungswechselmodul sowie ein mit einem Wechselsystem oder einem afokalen Vergrößerungswechselmodul ausgestattetes Mikroskop anzugeben, die es mit vergleichsweise geringem technischen Aufwand ermöglichen, dass bei einem Vergrößerungswechsel das Bild der Objektivpupille ortsfest bleibt.

Die Erfindung löst diese Aufgabe durch das Wechselsystem nach Anspruch 1 bzw. das Mikroskop nach Anspruch 12.

13. Vorteilhafte Weiterbildungen sind in den abhängigen Ansprüchen sowie der folgenden Beschreibung angegeben.

Das erfindungsgemäße Wechselsystem umfasst mehrere afokale Vergrößerungswechselmodule unterschiedlicher Vergrößerung, die wahlweise in einen längs der optischen Achse des Mikroskops verlaufenden Unendlichstrahlengang einbringbar sind. Die Vergrößerungswechselmodule enthalten jeweils ein Lichtumlenksystem. Die Lichtumlenksysteme sind ausgebildet, die Weglänge des das jeweilig Vergrößerungswechselmodul durchsetzenden Unendlichstrahlengangs derart einzustellen, dass sämtliche Vergrößerungswechselmodule ungeachtet ihrer unterschiedlichen Vergrößerung eine Austrittspupille eines Objektivs des Mikroskops längs der optischen Achse auf den gleichen Ort abbilden.

Die verschiedenen Lichtumlenksysteme, die in den das Wechselsystem bildenden Vergrößerungswechselmodulen enthalten sind, sind derart ausgebildet, dass Variationen in der Austrittspupillenlage, die durch einen Vergrößerungswechsel verursacht werden, kompensiert sind. Dies bedeutet, dass unabhängig davon, welches der Vergrößerungswechselmodule gerade in das Mikroskop eingesetzt ist, das Bild der Objektivaustrittspupille stets am gleichen Ort erzeugt wird.

Diese durch das erfindungsgemäße Wechselsystem realisierte Vereinheitlichung der Abbildungslänge, mit der die Austrittspupille des Objektivs durch das jeweilige Vergrößerungswechselmodul abgebildet wird, ermöglicht es, in einer ortsfesten Fourierebene ein optisches Bauteil wie einen SLM, einen DMD oder eine phasenbeeinflussende Maske ortsfest anzuordnen. Die optisch wirksame Fläche eines solchen Bauteils kann dann bei ortsfester Pupillenlage durch eine entsprechende Vergrößerung, d.h. durch Einbringen eines geeigneten Vergrößerungswechselmoduls, der Pupillengröße angepasst werden.

Die Modularität des erfindungsgemäßen Wechselsystems ist in zweifacher Hinsicht hilfreich. Zum einen kann die Modularität seitens des Herstellers in der Weise genutzt werden, dass er sich bei der Fertigung eines Mikroskopsystems, das einen Vergrößerungswechsler mit einer (einzigen) vorbestimmten Vergrößerung aufweisen soll, aus einem System verschiedener Module bedienen kann, die zwar unterschiedliche Vergrößerungen haben, jedoch strukturell gleichartig sind. Dies reduziert den Fertigungsaufwand erheblich. Zum anderen kann der Benutzer eines Mikroskopsystems die genannte Modularität in der Weise nutzen, dass er die Systemvergrößerung durch einen einfachen Vergrößerungswechsel, nämlich den Austausch eines in das Mikroskop eingesetzten Vergrößerungswechselmoduls durch ein strukturell gleichartiges Modul anderer Vergrößerung, variiert. Somit stellt das erfindungsgemäße Wechselsystem die Basis eines Schnellwechselkonzepts dar, das beispielsweise Verschiebesysteme oder Revolver oder auch andere lineare oder rotatorische Wechsler in manueller oder motorisierter Ausführung einsetzt.

Vorzugsweise haben die Vergrößerungswechselmodule jeweils einen Modulkörper, der eine lichteintrittseitige Wechselfläche und eine lichtaustrittseitige Wechselfläche aufweist, wobei die beiden Wechselflächen bei sämtlichen Modulkörpern identisch zueinander angeordnet sind. Die Wechselflächen stellen beispielsweise im Zusammenwirken mit korrespondierenden Anschlägen innerhalb des Unendlichstrahlengangs räumlich feste Schnittstellen dar, die es ermöglichen, die strukturell gleichartigen Modulkörper nach Bedarf in einfacher Weise zu wechseln. Dabei bildet die lichteintrittseitige Wechselfläche des jeweiligen Modulkörpers gleichsam eine mechanische Referenz für die Eintrittspupille des Vergrößerungswechselmoduls, die bei eingebautem Modul zur Deckung mit der Austrittspupille des Mikroskopobjektivs gebracht ist. Dementsprechend bildet die lichtaustrittseitige Wechselfläche des Modulkörpers eine mechanische Referenz für das Bild der Objektivaustrittspupille, das innerhalb des Unendlichstrahlengangs unter Einbeziehung des Vergrößerungswechselmoduls erzeugt wird. Die vorstehend genannte mechanische Referenz ist dabei so zu verstehen, dass für jedes Vergrößerungswechselmodul die Austrittspupille des Mikroskopobjektivs die gleiche Lage relativ zur lichteintrittseitigen Wechselfläche und das Bild der Austrittspupille die gleiche Lage relativ zur lichtaustrittseitigen Wechselfläche hat. Da die beiden Wechselflächen bei sämtlichen Modulköpern identisch zueinander angeordnet sind, ist auch diese mechanische Referenz zur Austrittspupille bzw. zu dessen Bild für alle Vergrößerungswechselmodule identisch. Werden somit die Vergrößerungswechselmodule über ihre Wechselflächen an gleicher Stelle in dem Unendlichstrahlengang positioniert, so ist sichergestellt, dass die Austrittspupille des Objektivs ungeachtet dessen, welches der Vergrößerungswechselmodule gerade in das Mikroskop eingesetzt ist, längs der optischen Achse stets an die gleiche Stelle abgebildet wird.

Der modulhafte Charakter des erfindungsgemäßen Wechselsystems wird durch die Definition der lichteintrittseitigen Wechselfläche und der lichtaustrittseitigen Wechselfläche erreicht sowie die Vorgabe eines maximalen Einbauraums, in dem das jeweilige Vergrößerungswechselmodul untergebracht werden muss. An den Wechselflächen sind sowohl die Richtung als auch die Lage der optischen Achse fest definiert, so dass die Austauschbarkeit der einzelnen Vergrößerungswechselmodule sichergestellt ist.

Vorzugsweise enthalten die Vergrößerungswechselmodule jeweils ein Vergrößerungssystem, das beispielsweise ein Kepler-Fernrohr oder ein Galilei-Fernrohr ist. Aus Gründen eines geringeren Bauraums ist insbesondere die Ausgestaltung als Kepler-Fernrohr vorteilhaft. In einer bevorzugten Ausführung ist das jeweilige Vergrößerungssystem dem Lichtumlenksystem in dem Unendlichstrahlengang nachgeordnet.

Die Positionierung des Vergrößerungssystems innerhalb des jeweiligen Modulkörpers sowie die Brennweiten der das Vergrößerungssystem bildenden optischen Elemente können so gewählt werden, dass die Gesamtlänge des jeweiligen Moduls minimiert und somit der maximal vorzuhaltende Bauraum begrenzt ist.

Vorzugsweise bewirken die Lichtumlenksysteme jeweils einen identischen Versatz eines die lichtaustrittseitige Wechselfläche durchsetzenden Teils der optischen Achse relativ zu einem die lichteintrittseitige Wechselfläche durchsetzenden Teil der optischen Achse. Durch diesen identischen Versatz sind für sämtliche Vergrößerungswechselmodule Lage und Ausrichtung der optischen Achse an den Wechselflächen identisch definiert, so dass die Austauschbarkeit der einzelnen Module sichergestellt ist.

In einer speziellen Ausführung weist der die lichtaustrittseitige Wechselfläche durchsetzende Teil der optischen Achse einen vorbestimmten Parallelversatz relativ zu dem die lichteintrittseitige Wechselfläche durchsetzenden Teil der optischen Achse auf. Durch diese Ausführung kann auch eine Strahlumlenkung von 180° realisiert werden.

Eine Strahlumlenkung um 90 ° ist gegeben, wenn der die lichtaustrittseitige Wechselfläche durchsetzende Teil der optischen Achse relativ zu dem die lichteintrittseitige Wechselfläche durchsetzenden Teil der optischen Achse in einem rechten Winkel umgelenkt und in einem vorbestimmten Abstand von der lichteintrittseitigen Wechselfläche angeordnet ist.

In einer bevorzugten Ausgestaltung umfassen die Lichtumlenksysteme jeweils mindestens ein erstes und ein zweites lichtreflektierendes Element, wobei das erste lichtreflektierende Element auf dem die lichteintrittseitige Wechselfläche durchsetzenden Teil der optischen Achse und das zweite lichtreflektierende Element auf dem die lichtaustrittseitige Wechselfläche durchsetzenden Teil der optischen Achse angeordnet ist. Durch geeignete Wahl der Relativanordnung der beiden das Lichtumlenksystem bildenden lichtreflektierenden Elemente kann die Weglänge des Unendlichstrahlengangs innerhalb des jeweiligen Vergrößerungswechselmoduls in der gewünschten Weise eingestellt werden, um die ortsfeste Pupillenabbildung zu erzielen. Die Verwendung zweier lichtreflektierender Elemente hat ferner den Vorteil, dass eine in dem Mikroskop ohnehin erforderliche Strahlumlenkung ohne Bildumkehr sichergestellt werden kann.

Die beiden lichtreflektierenden Elemente sind vorzugsweise Teile einer Spiegelanordnung oder eines Prismas. Für die weiter oben erwähnte rechtwinklige Strahlablenkung kommt insbesondere die Verwendung eines Smith- oder Pentaprismas bzw. einer dazu äquivalenten Spiegelanordnung in Betracht.

Das Wechselsystem kann auch ein Vergrößerungswechselmodul enthalten, dessen Vergrößerung gleich 1 ist. Dies bedeutet, dass bei diesem Modul lediglich das Lichtumlenksystem, nicht jedoch das bei den anderen Modulen vorgesehene Vergrößerungssystem vorhanden ist.

Gemäß eines weiteren Aspekts der Erfindung ist ein afokales Vergrößerungswechselmodul für ein Mikroskop vorgesehen, das in einen längs der optischen Achse des Mikroskops verlaufenden Unendlichstrahlengang einbringbar ist. Das Vergrößerungswechselmodul enthält ein Lichtumlenksystem, das ausgebildet ist, die Weglänge des das Vergrößerungswechselmodul durchsetzenden Unendlichstrahlengangs derart einzustellen, dass das Vergrößerungswechselmodul eine Austrittspupille eines Objektivs des Mikroskops längs der optischen Achse auf einen vorbestimmten Ort abbildet.

Ferner sieht die Erfindung ein Mikroskop vor, das ein Objektiv mit einer Austrittspupille sowie ein Wechselsystem oder ein afokales Vergrößerungswechselmodul vorstehend beschriebener Art umfasst.

In einer bevorzugten Ausführung des Mikroskops ist am Ort des durch das Vergrößerungswechselmodul erzeugten Bildes der Austrittspupille des Objektivs ein optisches Bauteil wie etwa ein SLM, ein DMD oder eine phasenbeeinflussende Maske angeordnet, das zur Beeinflussung der Mikroskopabbildung genutzt werden kann.

In einer weiteren bevorzugten Ausführungsform des Mikroskops ist das Vergrößerungswechselmodul Teil eines 4f-Systems, das vorzugsweise für eine aberrationsfreie Refokussierung genutzt wird.

Die Erfindung wird im Folgenden anhand der Figuren näher erläutert. Darin zeigen:
Figur 1 eine schematische Darstellung eines erfindungsgemäßen Mikroskops;
Figuren 2a bis 2d ein erstes Ausführungsbeispiel des Wechselsystems, das vier Vergrößerungswechselmodule umfasst;
Figur 3a bis 3d ein zweites Ausführungsbeispiel des Wechselsystems, das vier Vergrößerungswechselmodule enthält; und
Figuren 4a bis 4d ein drittes Ausführungsbeispiel des Wechselsystems, das vier Vergrößerungswechselmodul umfasst.

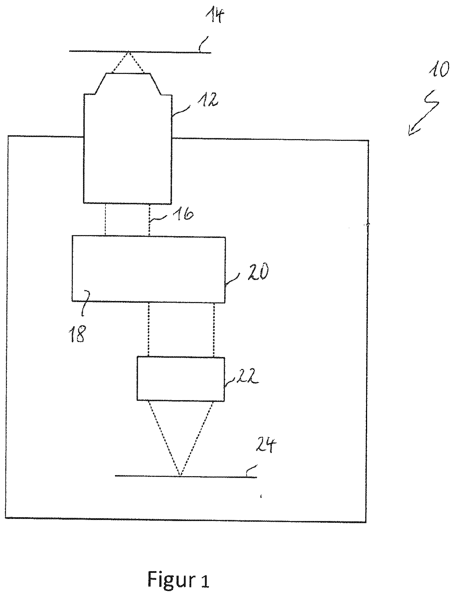

Figur 1 zeigt ein Mikroskop 10 in einem Blockdiagramm. Das Mikroskop 10 weist ein Objektiv 12 auf, das aus einer Objektebene 14 stammendes Licht empfängt. Dieses Licht tritt als kollimiertes Strahlenbündel aus dem Objektiv 12 aus und propagiert in einem Unendlichstrahlengang 16 zu einem Vergrößerungswechselmodul 18, das einen Modulkörper 20 hat. Das Vergrößerungswechselmodul 18 ist ein afokales optisches System. Dementsprechend tritt das Licht aus dem Vergrößerungswechselmodul 100 wiederum als kollimiertes Strahlenbündel aus. Durch eine Tubuslinse 22 wird das Licht dann zur Erzeugung eines Zwischenbildes in eine Zwischenbildebene 24 fokussiert.

In der Ausführungsform nach Figur 1 wird das Licht, das durch das afokale Vergrößerungswechselmodul 18 tritt, durch Letzteres derart umgelenkt, dass der Unendlichstrahlengang 16 einen Parallelversatz erfährt.

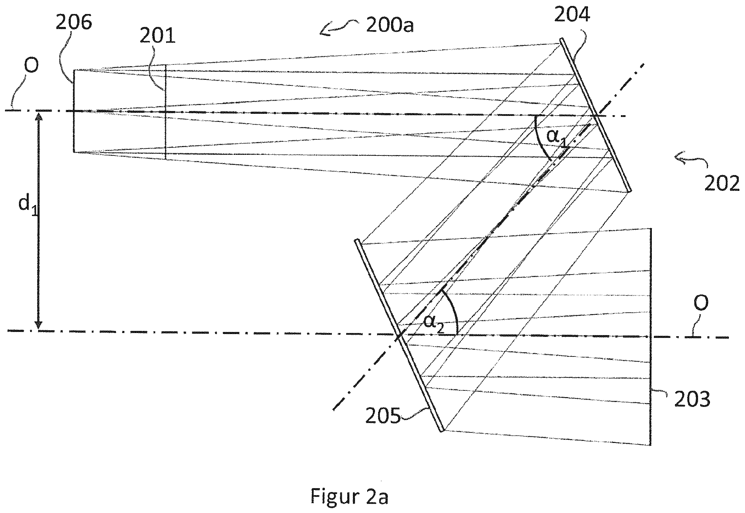

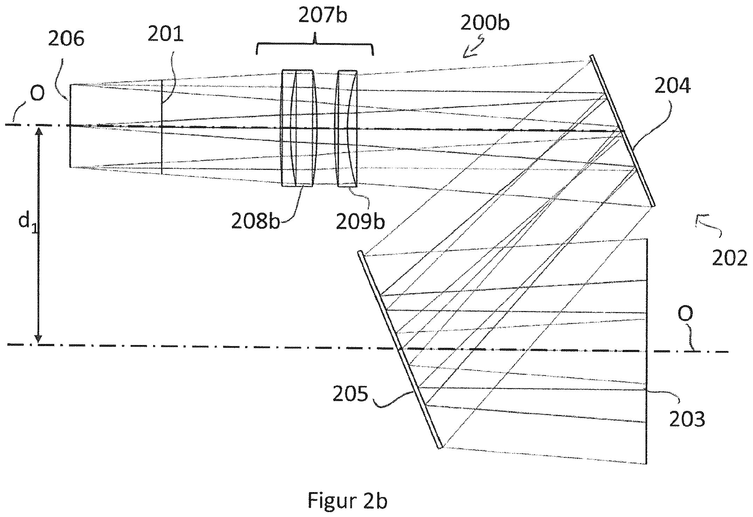

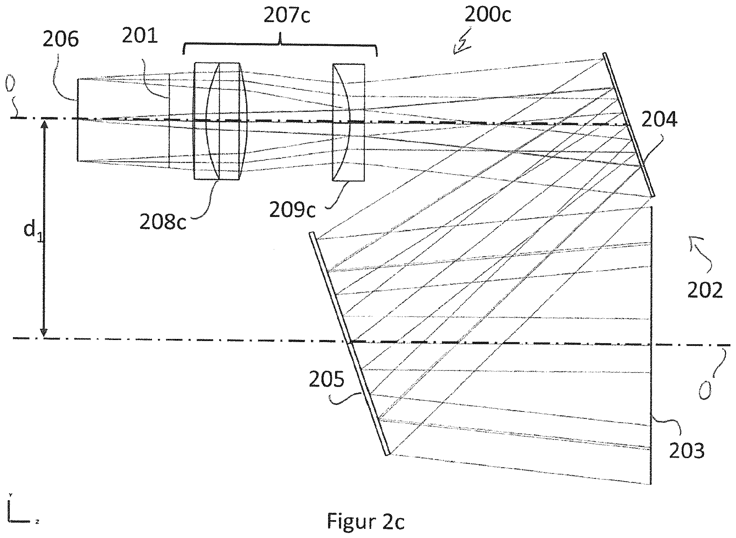

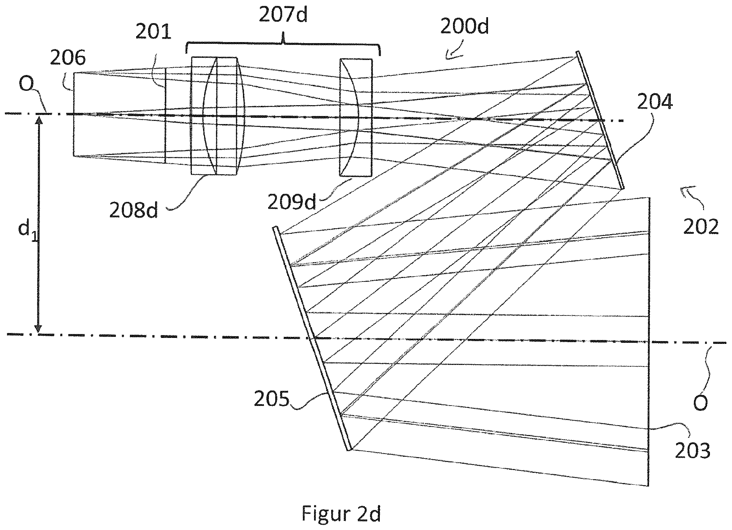

Die Figuren 2a bis 2d zeigen vier verschiedene Vergrößerungswechselmodule 200a bis 200d, die jeweils ein dem Vergrößerungswechselmodul 18 nach Figur 1 entsprechendes Modul bilden. Durch die Vergrößerungswechselmodule 200a bis 200d ist ein Wechselsystem gegeben, das eingesetzt werden kann, um in dem Mikroskop 10 die Gesamtvergrößerung zu ändern. Hierzu wird wahlweise eines der Vergrößerungswechselmodul 200a bis 200d in den Unendlichstrahlengang 16 des Mikroskops 10 eingebracht.

In dem Ausführungsbeispiel nach den Figuren 2a bis 2d hat das Vergrößerungswechselmodul 200a die Vergrößerung 1, das Vergrößerungswechselmodul 200b die Vergrößerung 1,05, das Vergrößerungswechselmodul 200c die Vergrößerung 1,5 und das Vergrößerungswechselmodul 200d die Vergrößerung 1,6. Selbstverständlich sind diese Angaben rein exemplarisch zu verstehen.

Das Vergrößerungswechselmodul 200a hat an seinem in Figur 2a nicht gezeigten Modulkörper eine lichteintrittseitige Wechselfläche 201, durch die das Licht längs der optischen Achse O in den Modulkörper eintritt. Das Licht wird dann durch ein Lichtumlenksystem 202 innerhalb des Modulkörpers so umgelenkt, dass es mit einem Parallelversatz durch eine an dem Modulkörper ausgebildete Wechselfläche 203 aus dem Vergrößerungswechselmodul 200a tritt. Somit erfährt der die lichtaustrittseitige Wechselfläche 203 durchsetzende Teil der optischen Achse O einen in Figur 2a mit d₁ bezeichneten Parallelversatz gegenüber dem die lichteintrittseitige Wechselfläche 201 durchsetzenden Teil der optischen Achse O.

Das Lichtumlenksystem 202 umfasst einen ersten Umlenkspiegel 204 und einen zweiten Umlenkspiegel 205. Dabei befindet sich der erste Umlenkspiegel 204 auf dem die lichteintrittseitige Wechselfläche 201 durchsetzenden Teil der optischen Achse O, während der zweite Umlenkspiegel 205 auf dem die lichtaustrittseitige Wechselfläche 205a durchsetzenden Teil der optischen Achse O angeordnet ist. Die beiden Umlenkspiegel 204 und 205 sind jeweils zur optischen Achse O schräggestellt und parallel zueinander ausgerichtet. Dementsprechend sind die in Figur 2a gezeigten Winkel α₁ und α₂ betragsmäßig gleich.

In Figur 2a ist die Eintrittspupille des Vergrößerungswechselmoduls 200a mit 206 bezeichnet. Sie hat längs der optischen Achse O einen fest vorgegebenen Abstand von der lichteintrittseitigen Wechselfläche 201. Befindet sich das Vergrößerungswechselmodul 200a im Unendlichstrahlengang 16 des Mikroskops 10, so ist die Eintrittspupille 206 am Ort der Austrittspupille des Objektivs 12 angeordnet.

Im Unterschied zu dem Vergrößerungswechselmodul 200a nach Figur 2a , welches die Vergrößerung 1 aufweist, enthalten die anderen Vergrößerungswechselmodule 200b, 200c und 200d jeweils ein Vergrößerungssystem 207b, 207c bzw. 207d, das aus zwei Linsengruppen 208b, 209b bzw. 208c, 209c bzw. 208d, 209d gebildet ist und ein Kepler-Fernrohr darstellt. Das die Vergrößerungswechselmodule 200a bis 200d umfassende Wechselsystem ist nun so konzipiert, dass bei sämtlichen Vergrößerungswechselmodulen 200a bis 200d der Abstand, den die Eintrittspupille 206 und damit bei eingebautem Modul die Austrittspupille des Objektivs 12 von der lichteintrittseitigen Wechselfläche 201 aufweist, identisch ist. Außerdem ist auch der Parallelversatz d₁ der optischen Achse O für sämtliche Vergrößerungswechselmodule 200a bis 200d gleich. Um nun sicherzustellen, dass das Bild der Austrittspupille, dessen Lage durch die unterschiedlichen Vergrößerungswirkungen der Vergrößerungssysteme 207b, 207c und 207d beeinflusst wird, für alle Module ortsfest bleibt, weisen die beiden das Lichtumlenksystem 202 bildenden Umlenkspiegel 204 und 205 in den einzelnen Verzögerungswechselmodulen 200b, 200c und 200d einen unterschiedlichen Abstand voneinander auf. Mit anderen Worten wird das Lichtumlenksystem 202 in jedem der Verzögerungswechselmodule 200b, 200c und 200d so auf das zugehörige Vergrößerungssystem 207b, 207c, 207d abgestimmt, dass alle Vergrößerungswechselmodule (einschließlich des Moduls 200a ohne Vergrößerungssystem) das Bild der Austrittspupille am gleichen Ort erzeugen.

Wie ein Vergleich der Figuren 2a bis 2d zeigt, sind die Ablenkspiegel 204 und 205 jeweils so zueinander angeordnet, dass keinerlei Abschattung des das jeweilige Vergrößerungswechselmoduls durchsetzenden Lichtbündels auftritt. Insbesondere ist also der Abstand d₁ so gewählt, dass die Abbildung unter Berücksichtigung der in der Systemkonzeption vorgesehenen maximalen Pupillengrößen und Feldwinkel für alle Vergrößerungswechselmodule 300a bis 300d vignettierungsfrei möglich ist.

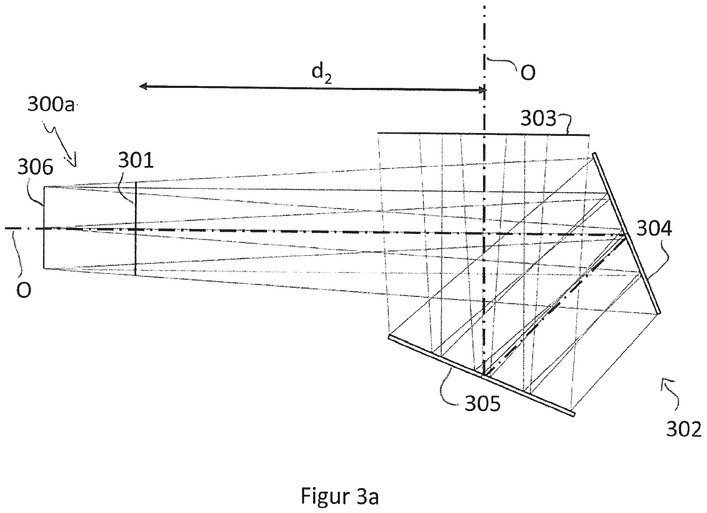

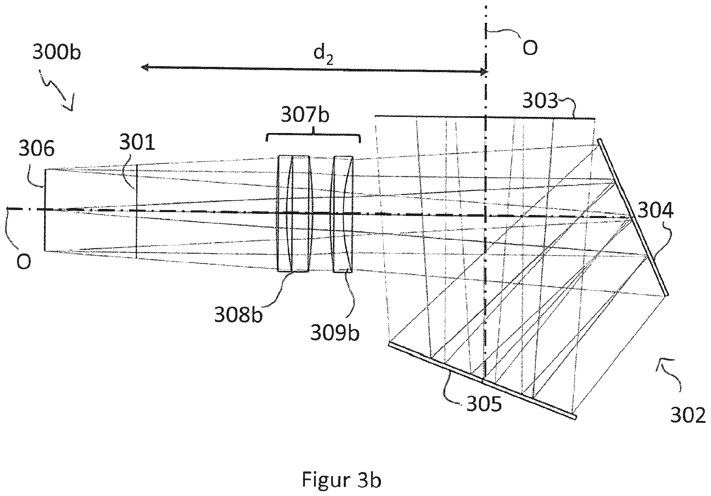

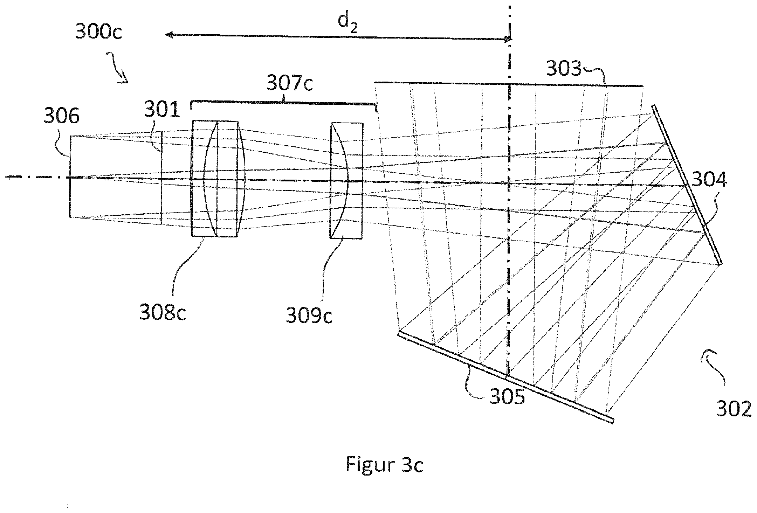

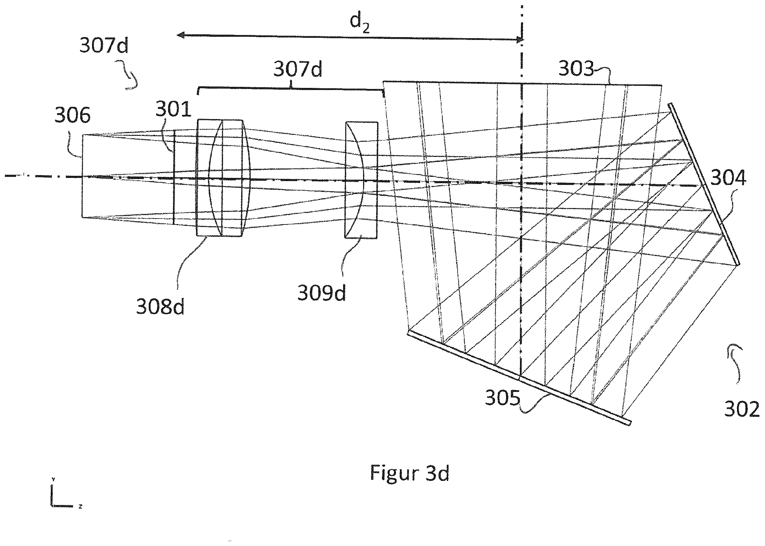

In den Figuren 3a bis 3d ist ein zweites Ausführungsbeispiel des erfindungsgemäßen Wechselsystems gezeigt, das ebenfalls entsprechend dem vorstehend erläuterten Konzept ausgeführt ist. Das Wechselsystem gemäß zweitem Ausführungsbeispiel umfasst ein in Figur 3a dargestelltes Vergrößerungswechselmodul 300a mit der Vergrößerung 1, ein in Figur 3b dargestelltes Vergrößerungswechselmodul 300b mit der Vergrößerung 1,05, ein in Figur 3c dargestelltes Vergrößerungswechselmodul 300c mit der Vergrößerung 1,5 sowie ein in Figur 3d dargestelltes Vergrößerungswechselmodul 300d mit der Vergrößerung 1,6.

Auch in diesem Ausführungsbeispiel weisen sämtliche Vergrößerungswechselmodule 300a bis 300d jeweils eine lichteintrittseitige Wechselfläche 301, ein aus zwei Umlenkspiegeln 304, 305 gebildetes Lichtumlenksystem 302, eine lichtaustrittseitige Wechselfläche 303 sowie eine Eintrittspupille 306 auf. Die Vergrößerungswechselmodule 300b, 300c und 300d weisen zudem (im Unterschied zu dem Vergrößerungswechselmodul 300a mit der Vergrößerung 1) jeweils ein Vergrößerungssystem 307b, 307c bzw. 307d auf, das aus zwei Linsengruppen 308b, 309b bzw. 308c, 309c bzw. 308d, 309d gebildet ist und ein Kepler-Fernrohr darstellt.

Die in den einzelnen Vergrößerungswechselmodulen 300a bis 300d eingesetzten Lichtumlenksysteme 304 sind auch in diesem Ausführungsbeispiel unter Berücksichtigung der Vergrößerungswirkungen der Vergrößerungssysteme 307b, 307c und 307d so ausgebildet, dass die Austrittspupille des Objektivs 12 bei allen Modulen auf den gleichen Ort abgebildet wird.

Das zweite Ausführungsbeispiel unterscheidet sich von dem in den Figuren 2a bis 2d dargestellten Wechselsystem dadurch, dass der die lichtaustrittseitige Wechselfläche 303 durchsetzende Teil der optischen Achse O durch das Lichtumlenksystem 302 relativ zu dem die lichteintrittseitige Wechselfläche 301 durchsetzenden Teil der optischen Achse O in einem rechten Winkel umgelenkt wird. Somit bewirken die Vergrößerungswechselmodule 300a bis 300d des zweiten Ausführungsbeispiels jeweils eine Strahlumlenkung von 90°. Zum Zwecke dieser Strahlumlenkung sind die beiden Umlenkspiegel 304 und 305 jeweils um 22,5° gegenüber der optischen Achse O verkippt (Bezug nehmend auf eine zur optischen Achse senkrechte Ausrichtung). Durch eine geeignete Positionierung des zweiten Umlenkspiegels 305 relativ zu dem ersten Umlenkspiegel 304 lässt sich nun für jedes der Vergrößerungswechselmodule 300a bis 300d sicherstellen, dass eine ortsfeste Abbildung der Austrittspupille des Objektivs 10 gegeben ist.

Bei sämtlichen Vergrößerungswechselmodulen 300a bis 300d ist der in den Figuren 3a bis 3d mit d₂ bezeichnete Abstand, den die die jeweilige lichtaustrittseitige Wechselfläche 303 durchsetzende optische Achse O von der lichteintrittseitigen Wechselfläche 301 hat, gleich. Wiederum ist der Abstand d₂ so gewählt, dass die Abbildung unter Berücksichtigung der in der Systemkonzeption vorgesehenen maximalen Pupillengrößen und Feldwinkel für alle Vergrößerungswechselmodule 300a bis 300d vignettierungsfrei möglich ist.

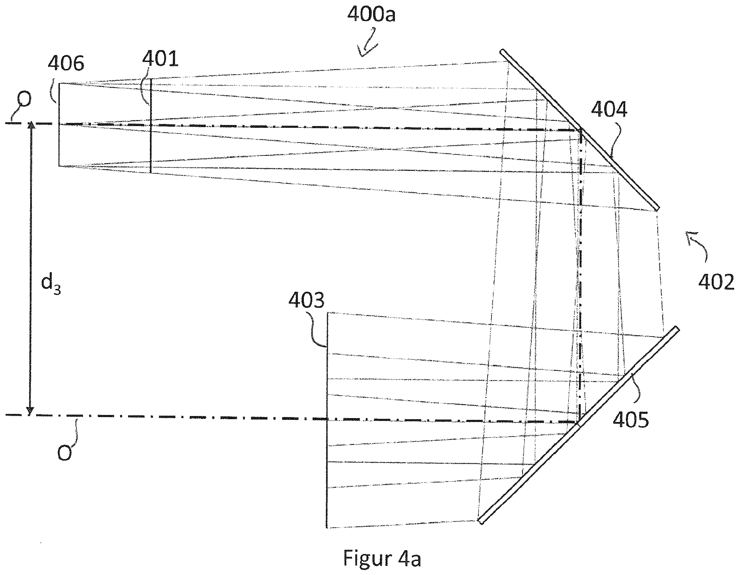

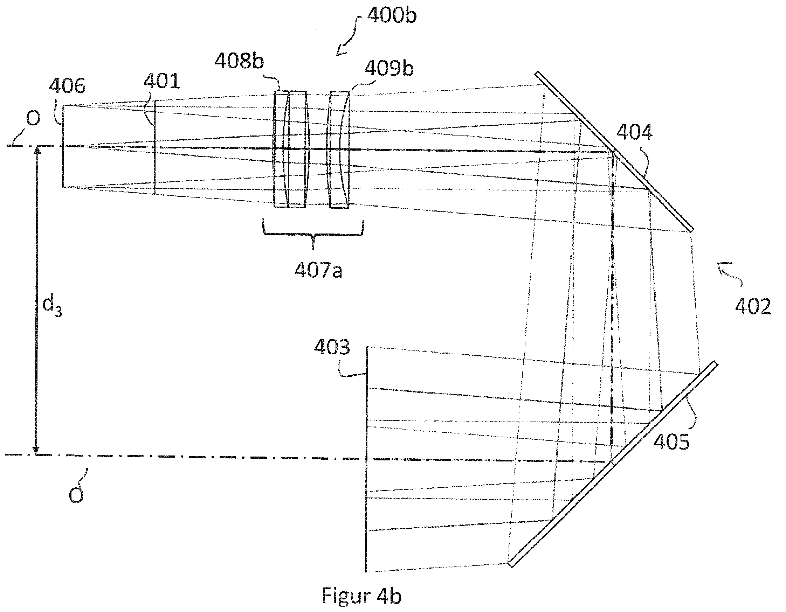

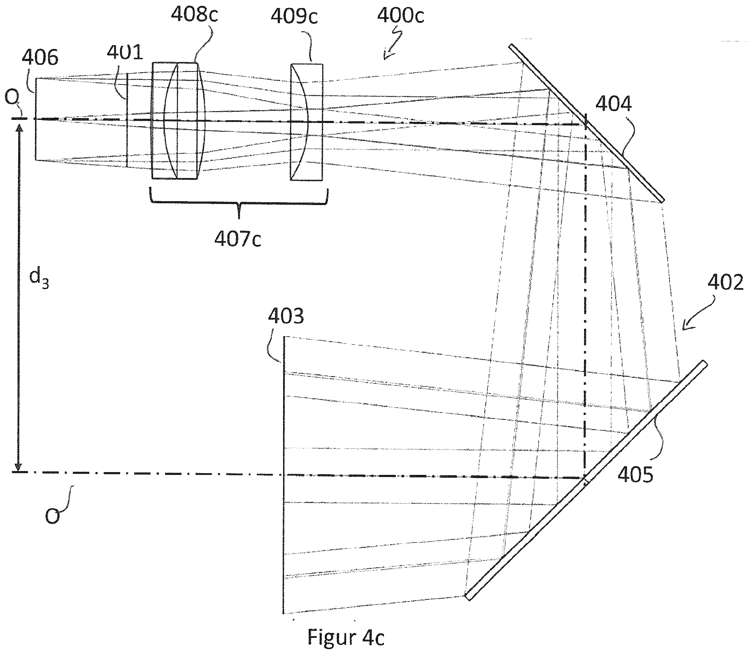

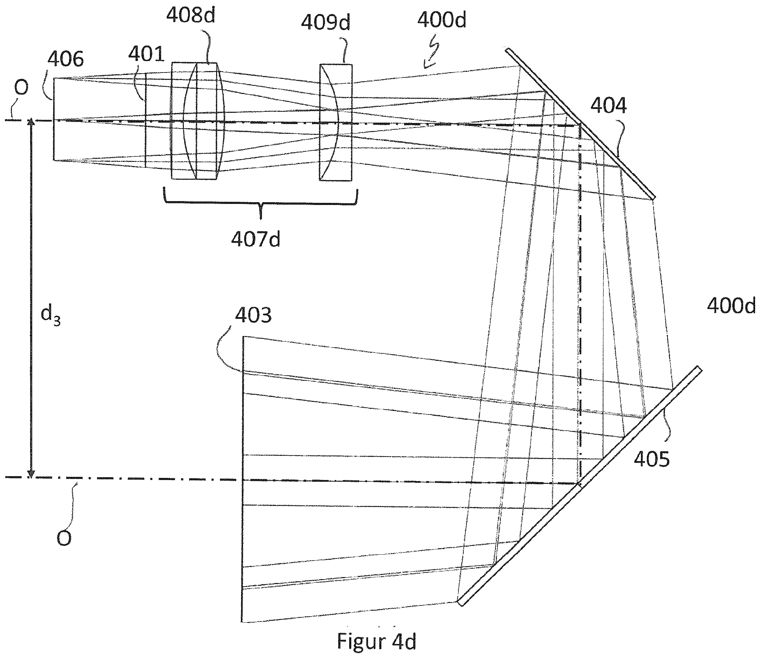

Die Figuren 4a bis 4d zeigen schließlich ein drittes Ausführungsbeispiel, das wiederum vier Vergrößerungswechselmodule 400a bis 400d mit den Vergrößerungen 1,0, 1,05, 1,5 und 1,6 vorsieht. Wiederum umfassen die Vergrößerungswechselmodule 400a bis 400d jeweils eine lichteintrittseitige Wechselfläche 401, ein Lichtumlenksystem 402, das aus zwei Umlenkspiegeln 404 und 405 gebildet ist, eine lichtaustrittseitige Wechselfläche 403 sowie eine Eintrittspupille 406. Die Vergrößerungswechselmodule 400b, 400c und 400d, die eine von 1 verschiedene Vergrößerung haben, enthalten zudem jeweils ein Vergrößerungssystem 407b, 407c bzw. 407d, das aus zwei Linsengruppen 408b, 409b, 408c, 409c, 408d, 409d gebildet ist und ein Kepler-Fernrohr darstellt.

Das dritte Ausführungsbeispiel ist im Unterschied zu den beiden zuvor beschriebenen Ausführungsbeispielen für eine Strahlumlenkung von 180 ° konzipiert. Dementsprechend sind die beiden das Lichtumlenksystem 402 bildenden Umlenkspiegel 404 und 405 jeweils um 45° zur optischen Achse geneigt. Diese Anordnung der beiden Umlenkspiegel 404, 405 unter gleichen Winkeln ist aus Gründen der Reflektivität und Polarisation gegenüber einer Anordnung bevorzugt, in der die Umlenkspiegel unter verschiedenen Winkeln zur optischen Achse geneigt sind, obgleich Letztere selbstredend auch nicht ausgeschlossen ist.

Bei den Vergrößerungswechselmodulen 400a bis 400d wird das durch die jeweilige Wechselfläche 401 eintretende Licht durch das jeweilige Lichtumlenksystem 402 so umgelenkt, dass es mit einem Parallelversatz in einer der Lichteintrittsrichtung entgegengesetzten Richtung aus der Wechselfläche 403 austritt. Somit erfährt der die lichtaustrittseitige Wechselfläche 203 durchsetzende Teil der optischen Achse O einen in den Figuren 4a bis 4d mit d₃ bezeichneten Versatz gegenüber dem die lichteintrittseitige Wechselfläche 201 durchsetzenden Teil der optischen Achse O. Der Versatz d₃ ist für alle Vergrößerungswechselmodule 400a bis 400b so gewählt, dass die Abbildung unter Berücksichtigung der Pupillengrößen und Feldwinkel vignettierungsfrei möglich ist.

Wie ein Vergleich der Figuren 4a bis 4d zeigt, werden die beiden Umlenkspiegel 404 und 405 über die die verschiedenen Vergrößerungswechselmodule 400a bis 400b hinweg gemeinsam gleichsam längs des lichteintrittseitigen bzw. des lichtaustrittseitigen Teils der optischen Achse O verschoben, um sicherzustellen, dass das Bild der Austrittspupille, dessen Lage durch die unterschiedlichen Vergrößerungswirkungen der Vergrößerungssysteme 407b, 407c und 407d beeinflusst wird, für alle Module ortsfest bleibt.

## Patentansprüche

1. Wechselsystem für ein Mikroskop (10), umfassend mehrere afokale Vergrößerungswechselmodule (200a-200d, 300a-300d, 400a-400d) unterschiedlicher Vergrößerung, die wahlweise in einen längs der optischen Achse (O) des Mikroskops (10) verlaufenden Unendlichstrahlengang (16) einbringbar sind, **dadurch gekennzeichnet, dass** die Vergrößerungswechselmodule (200a-200d, 300a-300d, 400a-400d) jeweils ein Lichtumlenksystem (202, 302, 402) enthalten, wobei die Lichtumlenksysteme (202, 302, 402) ausgebildet sind, die Weglänge des das jeweilige Vergrößerungswechselmodul (200a-200d, 300a-300d, 400a-400d) durchsetzenden Unendlichstrahlengangs (16) derart einzustellen, dass sämtliche Vergrößerungswechselmodule (200a-200d, 300a-300d, 400a-400d) ungeachtet ihrer unterschiedlichen Vergrößerung eine Austrittspupille eines Objektivs (12) des Mikroskops (10) längs der optischen Achse (O) auf den gleichen Ort abbilden.

2. Wechselsystem nach Anspruch 1, **dadurch gekennzeichnet, dass** die Vergrößerungswechselmodule (200a-200d, 300a-300d, 400a-400d) jeweils einen Modulkörper (20) haben, der eine lichteintrittseitige Wechselfläche (201, 301, 401) und eine lichtaustrittseitige Wechselfläche (203, 303, 403) aufweist, und dass die beiden Wechselflächen bei sämtlichen Modulkörper identisch zueinander angeordnet sind.

3. Wechselsystem nach Anspruch 1 oder 2, **dadurch gekennzeichnet, dass** die Vergrößerungswechselmodule (200b-200d, 300b-300d, 400b-400d) jeweils ein Vergrößerungssystem (207b-207d, 307b-307d, 407b-407d) enthalten.

4. Wechselsystem nach Anspruch 3, **dadurch gekennzeichnet, dass** das jeweilige Vergrößerungssystem (207b-207d, 307b-307d, 407b-407d) dem jeweiligen Lichtumlenksystem (202, 302, 402) in dem Unendlichstrahlengang (16) nachgeordnet ist.

5. Wechselsystem nach Anspruch 3 oder 4, **dadurch gekennzeichnet, dass** das jeweilige Vergrößerungssystem (207b-207d, 307b-307d, 407b-407d) ein Kepler-Fernrohr oder ein Galilei-Fernrohr ist.

6. Wechselsystem nach einem der vorhergehenden Ansprüche, **dadurch gekennzeichnet, dass** die Lichtumlenksysteme (202, 302, 402) jeweils einen identischen Versatz eines die lichtaustrittseitige Wechselfläche (203, 303, 403) durchsetzenden Teils der optischen Achse (O) relativ zu einem die lichteintrittseitige Wechselfläche (201, 301, 401) durchsetzenden Teils der optischen Achse (O) bewirken.

7. Wechselsystem nach Anspruch 6, **dadurch gekennzeichnet, dass** der die lichtaustrittseitige Wechselfläche (203, 303, 403) durchsetzende Teil der optischen Achse (O) einen vorbestimmten Parallelversatz relativ zu dem die lichteintrittseitige Wechselfläche (201, 301, 401) durchsetzenden Teil der optischen Achse aufweist.

8. Wechselsystem nach Anspruch 6, **dadurch gekennzeichnet, dass** der die lichtaustrittseitige Wechselfläche (203, 303, 403) durchsetzende Teil der optischen Achse (O) relativ zu dem die lichteintrittseitige Wechselfläche (201, 301, 401) durchsetzenden Teil der optischen Achse (O) in einem rechten Winkel umgelenkt und in einem vorbestimmten Abstand von der lichteintrittseitigen Wechselfläche angeordnet ist.

9. Wechselsystem nach einem der vorhergehenden Ansprüche, **dadurch gekennzeichnet, dass** die Lichtumlenksysteme (202, 302, 402) jeweils mindestens ein erstes und ein zweites lichtreflektierendes Element (204, 205, 404, 305, 404, 405) umfassen, wobei das erste lichtreflektierende Element (204, 304, 404) auf dem die lichteintrittseitige Wechselfläche (201, 301, 401) durchsetzenden Teil der optischen Achse (O) und das zweite lichtreflektierende Element (205, 305, 405) auf dem die lichtaustrittseitige Wechselfläche (203, 303, 403) durchsetzenden Teil der optischen Achse (O) angeordnet ist.

10. Wechselsystem nach Anspruch 9, **dadurch gekennzeichnet, dass** die beiden lichtreflektierenden Elemente (204, 205, 404, 305, 404, 405) Teile einer Spiegelanordnung oder eines Prismas sind.

11. Wechselsystem nach Anspruch 1, **dadurch gekennzeichnet, dass** eines der Vergrößerungswechselmodule (200a-200d, 300a-300d, 400a-400d) eine Vergrößerung gleich 1 hat.

12. Mikroskop (10), umfassend ein Objektiv (12) mit einer Austrittspupille und ferner umfassend ein Wechselsystem nach einem der Ansprüche 1 bis 11.

13. Mikroskop (10) nach Anspruch 12, **dadurch gekennzeichnet, dass** am Ort eines durch das Vergrößerungswechselmodul (200a-200d, 300a-300d, 400a-400d) erzeugten Bildes der Austrittspupille des Objektivs (12) ein optisches Bauteil angeordnet ist.

14. Mikroskop (10) nach Anspruch 13, **dadurch gekennzeichnet, dass** das optische Bauteil ein räumlicher Lichtmodulator, eine Mikrospiegelanordnung oder eine phasenbeeinflussende Maske ist.

15. Mikroskop (10) nach einem der Ansprüche 12 bis 14, **gekennzeichnet durch** ein 4f-System, wobei das jeweilige Vergrößerungsmodul Teil des 4f-Systems ist.

## Claims

1. A changing system for a microscope (10), comprising multiple afocal magnification changing modules (200a-200d, 300a-300d, 400a-400d) having different magnifications that are optionally introducible into an infinite beam path (16) running along an optical axis (O) of the microscope (10),
**characterized in that** the magnification changing modules (200a-200d, 300a-300d, 400a-400d) each contain a light deflection system (202, 302, 402), wherein the light deflection systems (202, 302, 402) are configured to adjust the path length of the infinite beam path (16) passing through the respective magnification changing module (200a-200d, 300a-300d, 400a-400d) such that all of the magnification changing modules (200a-200d, 300a-300d, 400a-400d), regardless of their different magnifications, image an exit pupil of a lens (12) of the microscope (10) onto the same location along the optical axis (O).

2. The changing system according to claim 1, **characterized in that** the magnification changing modules (200a-200d, 300a-300d, 400a-400d) each have a module body (20) that has a changing surface (201, 301, 401) on the light entry side and a changing surface (203, 303, 403) on the light exit side, and that the two changing surfaces are arranged identically relative to one another in all of the module bodies.

3. The changing system according to claim 1 or 2, **characterized in that** the magnification changing modules (200a-200d, 300a-300d, 400a-400d) each include a magnification system (207b-207d, 307b-307d, 407b-407d).

4. The changing system according to claim 3, **characterized in that** the respective magnification system (207b-207d, 307b-307d, 407b-407d) is arranged downstream of the respective light deflection system (202, 302, 402) in the infinite beam path (16).

5. The changing system according to claim 3 or 4, **characterized in that** the respective magnification system (207b-207d, 307b-307d, 407b-407d) is a Keplerian telescope or a Galilean telescope.

6. The changing system according to one of the preceding claims, **characterized in that** the light deflection systems (202, 302, 402) each produce an identical offset of a part of the optical axis (O) passing through a changing surface (203, 303, 403) on a light exit side relative to a part of the optical axis (O) passing through a changing surface (201, 301, 401) on a light entry side.

7. The changing system according to claim 6, **characterized in that** the part of the optical axis (O) passing through the changing surface (203, 303, 403) on the light exit side has a predetermined parallel offset relative to the part of the optical axis passing through the changing surface (201, 301, 401) on the light entry side.

8. The changing system according to claim 6, **characterized in that** the part of the optical axis (O) passing through the changing surface (203, 303, 403) on the light exit side is deflected at a right angle relative to the part of the optical axis (O) passing through the changing surface (201, 301, 401) on the light entry side, and is arranged at a predetermined distance from the changing surface on the light entry side.

9. The changing system according to one of the preceding claims, **characterized in that** the light deflection systems (202, 302, 402) each comprise at least one first and one second light-reflecting element (204, 205, 404, 305, 404, 405), wherein the first light-reflecting element (204, 304, 404) is arranged at the part of the optical axis (O) passing through changing surface (201, 301, 401) on the light entry side and the second light-reflecting element (205, 305, 405) is arranged at the part of the optical axis (O) passing through the changing surface (203, 303, 403) on the light exit side.

10. The changing system according to claim 9, **characterized in that** the two light-reflecting elements (204, 205, 404, 305, 404, 405) are parts of a mirror arrangement or of a prism.

11. The changing system according to claim 1, **characterized in that** one of the magnification changing modules (200a-200d, 300a-300d, 400a-400d) has a magnification equal to 1.

12. A microscope (10) comprising a lens (12) having an exit pupil and further comprising a changing system according to one of the claims 1 to 11.

13. The microscope (10) according to claim 12, **characterized in that** an optical component is arranged at the location of an image of the exit pupil of the lens (12), the image being produced by the magnification changing module (200a-200d, 300a-300d, 400a-400d).

14. The microscope (10) according to claim 13, **characterized in that** the optical component is a spatial light modulator, a micromirror arrangement, or a phase-influencing mask.

15. The microscope (10) according to one of the claims 12 to 14, **characterized by** a 4f system, the respective magnification module being part of the 4f system.

## Revendications

1. Système changeur destiné à un microscope (10), comprenant plusieurs modules changeurs de grossissement afocaux (200a-200d, 300a-300d, 400a-400d) de différentes puissances de grossissement qui peuvent être introduits sélectivement dans un chemin optique à l'infini (16) s'étendant le long de l'axe optique (O) du microscope (10),
**caractérisé en ce que** les modules changeurs de grossissement (200a-200d, 300a-300d, 400a-400d) comportent respectivement un système déflecteur de lumière (202, 302, 402), les systèmes déflecteurs de lumière (202, 302, 402) étant réalisés pour régler la longueur de trajet du chemin optique à l'infini (16) traversant le module changeur de grossissement (200a-200d, 300a-300d, 400a-400d) respectif de telle sorte que tous les modules changeurs de grossissement (200a-200d, 300a-300d, 400a-400d), quelle que soit leur puissance de grossissement différente, représentent une pupille de sortie d'un objectif (12) du microscope (10) le long de l'axe optique (O) au même endroit.

2. Système changeur selon la revendication 1, **caractérisé en ce que** les modules changeurs de grossissement (200a-200d, 300a-300d, 400a-400d) disposent respectivement d'un corps de module (20) qui présente une surface interchangeable côté entrée de lumière (201, 301, 401) et une surface interchangeable côté sortie de lumière (203, 303, 403), et **en ce que** les deux surfaces interchangeables sont disposées de manière identique l'une par rapport à l'autre sur tous les corps de module.

3. Système changeur selon la revendication 1 ou 2, **caractérisé en ce que** les modules changeurs de grossissement (200b-200d, 300b-300d, 400b-400d) comportent respectivement un système de grossissement (207b-207d, 307b-307d, 407b-407d).

4. Système changeur selon la revendication 3, **caractérisé en ce que** le système de grossissement (207b-207d, 307b-307d, 407b-407d) respectif est placé en aval du système déflecteur de lumière (202, 302, 402) respectif dans le chemin optique à l'infini (16).

5. Système changeur selon la revendication 3 ou 4, **caractérisé en ce que** le système de grossissement (207b-207d, 307b-307d, 407b-407d) respectif est un télescope de Kepler ou un télescope de Galilée.

6. Système changeur selon l'une quelconque des revendications précédentes, **caractérisé en ce que** les systèmes déflecteurs de lumière (202, 302, 402) provoquent respectivement un décalage identique d'une partie de l'axe optique (O) traversant la surface interchangeable côté sortie de lumière (203, 303, 403) par rapport à une partie de l'axe optique (O) traversant la surface interchangeable côté entrée de lumière (201, 301, 401).

7. Système changeur selon la revendication 6, **caractérisé en ce que** la partie de l'axe optique (O) traversant la surface interchangeable côté sortie de lumière (203, 303, 403) présente un décalage parallèle prédéterminé par rapport à la partie de l'axe optique traversant la surface interchangeable côté entrée de lumière (201, 301, 401).

8. Système changeur selon la revendication 6, **caractérisé en ce que** la partie de l'axe optique (O) traversant la surface interchangeable côté sortie de lumière (203, 303, 403) est déviée perpendiculairement par rapport à la partie de l'axe optique (O) traversant la surface interchangeable côté entrée de lumière (201, 301, 401) et est disposée à une distance prédéterminée de la surface interchangeable côté entrée de lumière.

9. Système changeur selon l'une quelconque des revendications précédentes, **caractérisé en ce que** les systèmes déflecteurs de lumière (202, 302, 402) comprennent respectivement au moins un premier et un deuxième élément réfléchissant la lumière (204, 205, 404, 305, 404, 405), le premier élément réfléchissant la lumière (204, 304, 404) étant disposé sur la partie de l'axe optique (O) traversant la surface interchangeable côté entrée de lumière (201, 301, 401), et le deuxième élément réfléchissant la lumière (205, 305, 405) est disposé sur la partie de l'axe optique (O) traversant la surface interchangeable côté sortie de lumière (203, 303, 403) .

10. Système changeur selon la revendication 9, **caractérisé en ce que** les deux éléments réfléchissant la lumière (204, 205, 404, 305, 404, 405) font partie d'un agencement de miroirs ou d'un prisme.

11. Système changeur selon la revendication 1, **caractérisé en ce que** l'un des modules changeurs de grossissement (200a-200d, 300a-300d, 400a-400d) présente une puissance de grossissement égale à 1.

12. Microscope (10), comprenant un objectif (12) doté d'une pupille de sortie et comprenant en outre un système changeur selon l'une quelconque des revendications 1 à 11.

13. Microscope (10) selon la revendication 12, **caractérisé en ce qu'**un composant optique est disposé à l'emplacement d'une image de la pupille de sortie de l'objectif (12), générée par le module changeur de grossissement (200a-200d, 300a-300d, 400a-400d).

14. Microscope (10) selon la revendication 13, **caractérisé en ce que** le composant optique est un modulateur de lumière dans l'espace, un agencement de micro-miroirs ou un masque de phase.

15. Microscope (10) selon l'une quelconque des revendications 12 à 14, **caractérisé par** un système 4f, le module de grossissement respectif faisant partie du système 4f.
